# EUROPEAN PATENT APPLICATION

(11) **EP 1 905 311 A1**
(43) Date of publication of application: **02.04.2008**
(21) Application number: 07115512.1
(22) Date of filing: 03.09.2007
(51) Int. Cl.: A23L 1/00

(54) **Process for production of compounds, which are starch containing particles coated embedded or encapsulated by at least one biopolymers**

(30) Priority: 29.09.2006 EP 06121548
(71) Applicant: Unilever PLC, Blackfriars London Greater London EC4P 4BQ (GB); UNILEVER N.V., 3013 AL Rotterdam (NL)
(72) Inventor: Butler, Michael, Francis, Bedford, Bedfordshire MK44 1LQ (GB); Heinrich, Emmanuel, 3133 AT Vlaardingen (NL); Rayment, Phillippa, Bedford, Bedfordshire MK44 1LQ (GB)
(74) Representative: Hugot, Alain

(57) **Abstract**

The present invention relates to process for production of starch containing particles, which are coated, embedded or encapsulated by at least one biopolymer, characterized in that the process is carried out in an emulsion, as well as for the use of these particles in food products.

## Description

The present invention relates to process for production of compounds, which are starch containing particles coated, embedded or encapsulated by at least one biopolymer, characterized in that the process is carried out in an emulsion, as well as for the use of these particles in food products.

Starches as carbohydrates are the preferred energy source for the body. Starches occur naturally in vegetables and grains. During digestion, starches are broken down into glucose, which provides essential energy for brain, central nervous system and for muscles during activity. Starches are one prime source of energy. The other source are sugars. Starches are far easier to break down in the digestive tract (producing less metabolic waste products) than either fat or protein and as a result the body's reserves of carbohydrate energy (stored in the blood, liver and muscles) are utilised first and are rapidly depleted during exercise. If these starches are not converted to energy, they are mostly converted and stored as fat, with a small amount stored as glycogen in the liver and muscles. When the body calls for more fuel (such as during exercise), the fat or glycogen is converted back to glucose and used accordingly.

It is desirable that the digestibility of starches be slowed to provide a controlled and/or steady release of glucose to the body over a period of several hours. Contrarily to the transit time of a meal in the stomach that can vary mainly in function of the type and quantity of food ingested, the transit time in the small intestine where most of starches digestion occurs is in average of 2 hours roughly before large intestine is reached. Therefore it is desirable that starch hydrolysis happens in a controlled and gradual way in the small intestine so that sustained energy can be delivered to the body. Additionally, the starch digestion should be complete or close to complete after 2 hours transit in the small intestine in order to minimise the quantity of undigested starch entering into the colon.

The slow release should work in any kind of food product in which these compounds according to the present invention are incorporated in. The food products can be food for humans (human food product) as well as for animals. The food product, which contains the compounds according to the present invention, can have any physical form, which is common for food products. The food product can be solid or liquid, soft or hard, gel-like, frozen, cooked, boiled, pasteurised, unpasteurised, etc. The compounds according to the present invention must be incorporated into the food products without being destroyed.

When the compounds according to the present invention, which are starch containing particles coated, embedded or encapsulated by at least one biopolymer are incorporated into food products, especially in food for humans, then it is desirable that these compounds can not be detected in mouth during the consumption. The mouthfeel of the food product is a very important criteria.

For a slow release of starch larger compounds are preferred, because the digestion takes place slower. But for a good mouthfeel smaller particles are usually preferred. Therefore a compromise regarding the dimension of the compounds has to be found.

It has to be said that the mouthfeel also depends on the softness of the compounds as well as on the format of food product wherein the compounds are to be incorporated in.

Surprisingly, it has been found out that when the process of production of compounds which are starch containing particles coated, embedded or encapsulated by at least one biopolymer is carried out in an emulsion, the properties of the compounds in view of the energy release as well as the mouthfeel are good.

Therefore, the present invention relates to a process of production of compounds which are starch containing particles coated, embedded or encapsulated by at least one biopolymer, characterized in that the process is carried out in an emulsion.

In the context of the present invention the term compound means the coated, embedded or encapsulated product.
In the context of the present invention the term starch containing particle means the particle, which is not (yet) coated, embedded or encapsulated.

Obtained by the reaction according to the invention are compounds which are starch containing particles coated, embedded, encapsulated by at least one biopolymer. Starches are not part of the coating, embedding or encapsulating layer. That means that the biopolymer are no starches or do not comprise starches.

The compounds as well as the starch containing particles can have any physical form. Usually the starch containing particles are solid or liquid. The starch could also be crystallised.

The preferred form of the starch containing particle is the solid and crystallised form.

The starch containing particles can have any shape, such as spheres, tubes, fibres, as well as ill-defined forms.

The same applies for the compounds. The compounds according to the present invention are usually solid, gel or in a liquid form. Preferably they are solid or gel-like.

The compounds can have any shape, such as spheres, tubes, fibres, as well as ill-defined forms.

The term "starch containing particles" means particles which are made out of starch material, but which can comprise further non-starch material. These materials are not carbohydrates.
This means that the term "starch containing particles" covers particles, which are pure starch or mixtures of different starches as well as starch (or mixture of starches) mixed with other non-carbohydrate compounds. The particles do not comprise any sugar compounds.
Furthermore it has to be stated that the coated, embedded or encapsulated particles are either compounds wherein the starches are concentrated in the core of the particle (coated, encapsulated) or they are starch particles dispersed in a matrix of biopolymeric material (embedded).
Under term "coated and encapsulated starch containing particles" we defined compounds wherein the starch(es) (or starch mixed with other ingredients) is located in the middle (core) of the compound and it is coated or encapsulated by at least one biopolymer. The starch is not part of the coating or the encapsulating material and vice versa the biopolymer is not part of the core.
Under the term "embedded starch containing particles, we defined compounds wherein the starch(es) (or starch mixed with other ingredients) are dispersed,
so that the starches are always concentrated at certain spots in the matrix. In the sense of the present invention the starches are not part of the matrix and vice versa the biopolymer is not part of the starch.

The compounds according to the present invention are starch containing particles coated, embedded or encapsulated by at least one biopolymer, wherein the starch containing particles can optionally comprise at least one non carbohydrate compounds and wherein the biopolymer is no starch or do not contain starch.

The compounds according to the present invention can contain starch, which is from natural or synthetic origin. Of course in case that the starch comes from a natural source there are always other compounds present. But it is also possible to mix the starch with other useful (non carbohydrate) compounds, which are not harmful to the animal or human body. Such compounds could be for example proteins, peptides, vitamins, probiotics, etc.

The starch can be raw starches, modified starches, and pregelatinized starches. Preferred are raw and modified starches are preferred.

In the present invention the biopolymer is usually present in the form of a gel, wherein the gel comprises
0.5 - 20 weight-% (wt-%) of at least one biopolymer and
80 - 99.5 wt-% of water.

The weight percentages are based on the total weight of the biopolymer gel.

Preferably, the gel comprises 0.5 -15 wt-%, more preferred 0.5 - 10 wt-%, especially preferred 1 - 10 wt-%, very especially preferred 1 - 5 wt-% of at least one biopolymer. The weight percentages are based on the total weight of the biopolymer gel.

As a consequence thereof, the water content is preferably 85 - 99.5 wt-%, more preferred 90 - 99.5 wt-%, especially preferred 90 - 99 wt-%, very especially preferred 95 - 99 wt-% of water. The weight percentages are based on the total weight of the biopolymer gel.

The content of starch in the compounds which are starch containing particles coated, embedded or encapsulated by at least one biopolymer is 0.1 - 20 wt-%, based on the total weight of the compounds. Preferably the content of starch is 0.5 - 15 wt-%, more preferably, 0.5 - 10 wt-% equally preferred 1 - 15 wt-%, especially preferred 1 - 10 wt-%, based on the total weight of the compounds.

Therefore the present application relates to a process for production of compounds which are starch containing particles coated, embedded or encapsulated by at least one biopolymer, wherein compounds comprise
80 - 99.9 wt-% based on the total weight of compounds, of at least one biopolymer gel which comprises
0.5 - 20wt-%, based on the total weight of the biopolymer gel, of at least one biopolymer and
80 - 99.5 wt-%, based on the total weight of the biopolymer gel, of water and
0.1 - 20 wt-% based on the total weight of the compounds, of at least one starch, is used
characterized in that the process is carried out in an emulsion, as well as for the use of these particles in food products.

All the preferences for the weight percentages as mentioned above apply as well.

The size of the starch containing particles can be a few microns as well as a few millimetres. For the purpose of the present invention the size of the starch containing particles is less than 1000 microns. Usually their size is between 5 and 1000 microns, preferably between 10 and 800 microns, more preferably between 20 and 500 microns.

The size of the compounds according to the present invention can be a few microns as well as a few millimetres. For the purpose of the present invention the size of the compounds according to the present invention is less than 1000 microns. Usually it is between 5 and 1000 microns, preferably between 10 and 800 microns, more preferably between 20 and 500 microns.
Of course a compound is always larger than the corresponding starch containing particle. When the starch containing particles are embedded by at least one biopolymer the compounds are usually much larger than the starch containing particles, which are embedded therein.

The compounds as well as the starch containing particles can have any form. They can be a bead, a sphere, a fibre, or any other form. When these compounds are used in food products, it is obvious that mixtures of several forms can be used.

The compounds do not coat, embed or capsulate the particles in a permanent way. That means the resulting compounds release the starch during time as already stated above. This release happens inside the human or animal body after the intake of the compounds according to the present invention.
If compounds according to the present invention are eaten the starch is released by the help of enzymes.
The compounds according to the present invention can be described as sponge-like compounds. Therefore the compounds according to the present invention have pores, which are about between 50nm and 100nm.
The pores sizes can be measured by Transmission Electron Microscopy (TEM). The following procedure has been used to determine the pore sizes. To enhance fixation, the beads were cut in half and then placed in 0.1 % ruthenium tetroxide for 90 minutes. The beads were then rinsed using distilled water for 20 minutes and this was repeated. The beads were then stained in 1 % aq. uranyl acetate overnight. The beads were dehydrated in ethanol and infiltrated with epoxy resin, which was polymerised at 60°C for 48 hours. Sections of approximately 100nm thickness were prepared and stained in lead citrate. The sections were then examined in Jeol 1200 TEM at 100KV.

The biopolymer can be any biopolymer which is able to coat, embed or encapsulate starch containing particles. Additionally, because the compounds according to the present invention are incorporated into food products, the biopolymer should be not harmful to humans and animals.
The biopolymer is no starch or does not comprise starch.

Preferred biopolymers are physically (such as ionically) and/or covalently crosslinkable polysaccharides.

More preferred biopolymers are physically and/or covalently crosslinkable polysaccharides which are β-linked polysaccharides.

Such crosslinkable polysaccharide includes food hydrocolloids such as agarose, chitin, carrageenan, pectins, amidated pectines, xanthan, alginates, gum arabic, galactomannans like locust bean gum, guar and tara gum, and cellulosics like carboxymethylcellulose, methylcellulose, hydroxypropylcellulose and methylhydroxypropylcellulose as well as gellans, ispaghula, β-glucans, konjacglucomannan, gum tragacanth, detarium and tamarind.

Another preferred biopolymer is chitosan, which is a linear polysaccharide composed of randomly distributed β-(1-4)-linked D-glucosamine (deacetylated unit) and N-acetyl-D-glucosamine (acetylated unit). Chitosan is produced commercially by deacetylation of chitin (can be produced from chitin also), which is the structural element in the exoskeleton of crustaceans (crabs, shrimp, etc.). The degree of deacetylation (%DA) can be determined by NMR spectroscopy, and the %DA in commercial chitosans is in the range 60-100 %

The most preferred physically and/or covalently crosslinkable and β-linked polysaccharide are alginates. Chemically, alginate is a linear copolymer with homopolymeric blocks of (1-4)-linked β-D-mannuronate (M) and its C-5 epimer α-L-guluronate (G) residues, respectively, covalently linked together in different sequences or blocks. The ratio of the different blocks can differ widely. The relative amount of each block type varies both with the origin of the alginate. Preferred are alginates with a M:G ratio of 80:20 to 20:80.
Alginates are commercially available.

The process of production of the compounds, which are starch containing particles coated, embedded or encapsulated by at least one biopolymer, is carried it out in a water-in-oil emulsion.

"Water-in-oil emulsion" refers to a water-in-oil mixture in which the oil forms a continuous phase and the water is in discontinuous droplets. A water-in-oil emulsion can be distinguished from an oil-in-water emulsion by using an electrical emulsion tester according to common methods. An oil-in-water emulsion will conduct electricity with relatively low resistance since water forms its external or continuous phase, whereas a water-in-oil emulsion will not conduct, or very poorly conduct, electricity.

"Oil phase" in a water-in-oil emulsion refers to all components in the formulation that individually exceed their solubility limit in the water phase; these are materials that generally have solubilities of less than 1% in distilled water, however, water phase components such as salts may decrease the solubility of certain oils resulting in their partitioning into the oil phase.

"Water phase" in a water-in-oil emulsion refers to the water present and any components that are water soluble, i.e., have not exceeded their solubility limit in water;

As oils for the emulsion any kind of liquid oil (but preferably oils which are not harmful to the human body).

Suitable oils can be from vegetable or animal sources.

Preferred oils are vegetable oils, like Coconut oil, Corn oil, Cottonseed oil, Canola oil, Olive oil, Palm oil, Peanut oil (Ground nut oil), Safflower oil, Sesame oil, Soybean oil, Sunflower oil, Almond oil, Cashew oil, Hazelnut oil, Macadamia oil, Pecan oil, Pistachio oil, Walnut oil, Acai oil, Blackcurrant seed oil, Borage seed oil, Evening primrose oil, Carob seed pods, Amaranth oil, Apricot oil, Argan oil, Avocado oil, Babassu oil, Ben oil, Carob pod oil (Algaroba oil), Coriander seed oil, False flax oil (made of the seeds of Camelina sativa), Hemp oil, Kapok seed oil, Meadowfoam seed oil, Mustard oil (pressed), Okra seed oil (Hibiscus seed oil), Perilla seed oil, Pine seed oil, Poppyseed oil, Prune kernel oil, Pumpkin seed oil, Quinoa oil, Ramtil oil, Rice bran oil, Tea oil (Camellia oil), Thistle oil, Wheat germ oil, Castor oil, radish oil, Ramtil oil and Tung oil, Animal oils, like tallow oil and fish oil (for example cod liver oil).

Therefore a further embodiment relates to a process as described above wherein the oil are vegetable oils, like Coconut oil, Corn oil, Cottonseed oil, Canola oil, Olive oil, Palm oil, Peanut oil (Ground nut oil), Safflower oil, Sesame oil, Soybean oil, Sunflower oil, Almond oil, Cashew oil, Hazelnut oil, Macadamia oil, Pecan oil, Pistachio oil, Walnut oil, Acai oil, Blackcurrant seed oil, Borage seed oil, Evening primrose oil, Carob seed pods, Amaranth oil, Apricot oil, Argan oil, Avocado oil, Babassu oil, Ben oil, Carob pod oil (Algaroba oil), Coriander seed oil, False flax oil (made of the seeds of Camelina sativa), Hemp oil, Kapok seed oil, Meadowfoam seed oil, Mustard oil (pressed), Okra seed oil (Hibiscus seed oil), Perilla seed oil, Pine seed oil, Poppyseed oil, Prune kernel oil, Pumpkin seed oil, Quinoa oil, Ramtil oil, Rice bran oil, Tea oil (Camellia oil), Thistle oil, Wheat germ oil, Castor oil, radish oil, Ramtil oil and Tung oil, or
Animal oils, like tallow oil and fish oil (for example cod liver oil).
Mixtures of these oils can be uses as well.

For preparing the emulsion a surfactant compound is also necessary. For that purpose any commonly known and commonly used surfactant can be used.

Emulsifiers: Any conventionally usable emulsifier can be used for the compositions. Emulsifier systems may comprise for example: Carboxylic acids and their salts: alcalin soap of sodium, potassium and ammonium, metallic soap of calcium or magnesium, organic basis soap such as Lauric, palmitic, stearic and oleic acid etc. Alkyl phosphates or phosphoric acid esters: acid phosphate, diethanolamine phosphate, potassium cetyl phosphate. Ethoxylated Carboxylic Acids or Polyethyleneglycol esters (PEG-n Acylates). Linear fatty alcohols having from 8 to 22 carbon atoms, branched from 2 to 30 mol of ethylene oxide and/or from 0 to 5 mol propylene oxide with fatty acids having from 12 to 22 carbon atoms and with alkylphenols having from 8 to 15 carbon atoms in the alkyl group. Fatty alcohol Polyglycolether such as Laureth-n, Ceteareth-n, Steareth-n, Oleth-n. Fatty acid polyglycolether such as PEG-n Stearate, PEG-n Oleate, PEG-n Cocoate Monoglycerides, as well as any type of mono-and di-glycerides (as well as mixtures of both) and Polyol esters: C₁₂-C₂₂ fatty acid mono- and di-esters of addition products of from 1 to 30 mol of ethylene oxide with polyols. Fatty acid and polyglycerol ester such as Monostearate glycerol, diisostearoyl polyglyceryl-3-diisostearates, polyglyceryl-3-diisostearates, triglyceryl diisostearates, polyglyceryl-2-sesquiisostearates or polyglyceryl dimerates. Mixtures of compounds from a plurality of those substance classes are also suitable. Fatty acid polyglycolesters such as Monostearate diethylene glycol, Fatty acid and Polyethylene glycol esters, Fatty acid and saccharose esters such as Sucro esters, glycerol and saccharose esters such as Sucro glycerides Polyethoxylyated fatty acid esters of sorbitan: Sorbitan mono- and di-esters of saturated and unsaturated fatty acids having from 6 to 22 carbon atoms and ethylene oxide addition products Polysorbate-n series, such as sorbitan dioleate, sorbitan monolaurate, sorbitan monooleate, sorbitan monooleate, sorbitan monopalmitate, sorbitan monostearate, sorbitan monostearate-palmitate, sorbitan sexquioleate, sorbitan tristearate, sorbitan trioleate, sorbitan trioleate, polyoxyethylene sorbitan monostearate (polysorbat 20, polysorbat 40, polysorbat 60, polysorbat 65, polysorbat 80, polysorbat 85, Tween 20, Tween 40, Tween 60, Tween 65, Tween 80 and Tween 85), Sorbitan esters such as Sesquiisostearate, sorbitan, PEG-(6)-isostearate sorbitan, PEG-(10)-Sorbitan laurate, PEG-17-dioleate sorbitan. Glucose derivatives: C₈-C₂₂ alkyl-mono and oligo-glycosides and ethoxylated analogues with glucose being preferred as the sugar component.

### Methyl glucose Dioleate/Methyl glucose isostearate. Sulfates and sulfonated derivatives:

Dialkylsulfosuccinates (DOSS: Dioctyl succinate), alkyl lauryl sulfonate, linear sulfonated parafins, sulfonated tetrapropylene sulfonate, sodium lauryl sulfates, ammonium and ethanolamine lauryl sulfates, lauryl ether sulfates, sodium laureth sulfates, sulfosuccinates, acetyl isothionates, alkanolamide sulfates such as Taurines, Methyl taurines, Imidazole sulfates. Amine derivatives: amine salts, ethoxylated amines such as Oxide amine, with chains containing an heterocycle such as alkylimidazolines, pyridine derivatives, isoquinoteines, cetyl pyridinium chlorure, cetyl pyridinium bromure, quaternary ammonium such as cetyltrimethylbromure ammonium bromure (CTBA), Stearylalkonium. Amide derivatives, alkanolamides such as acylamide DEA, ethoxylated amides, such as PEG-n acylamide, oxydeamide. Polysiloxane/Polyalkyl/Polyether Copolymers and derivatives: dimethicone, copolyols, silicone polyethylene Oxide copolymer, silicone glycol copolymer. Propoxylated or POE-n Ethers (Meroxapols), Polaxamers or poly(oxyethylene)ₘ-block-poly(oxypropylene)ₙ-block(oxyethylene) As well as Polyglycerol Polyricinoleate (PGPR).

Zwitterionic surfactants that carry at least one quaternary ammonium group and at least one carboxylate and/or sulfonate group in the molecule. Zwitterionic surfactants that are especially suitable are the so-called betaines, such as N-alkyl-N,N-dimethylammonium glycinates, for example cocoalkyldimethylammonium glycinate, N-acylaminopropyl-N,N-dimethylammonium glycinates, for example cocoacylaminopropyldimethylammonium glycinate, and 2-alkyl-3-carboxymethyl-3-hydroxyethylimidazolines each having from 8 to 18 carbon atoms in the alkyl or acyl group and also cocoacylaminoethylhydroxyethyl-carboxy-methylglycinate, N-alkylbetaine, N-alkylaminobetaines. Alkylimidazolines, alkylopeptides, lipoaminoacides

Self Emulsifying Bases (K. F. DePolo-A Short Textbook of Cosmetology, Chapter 8, Table 8-7, p250 251):

Non ionic bases such as PEG-6 Beeswax (and) PEG-6 Stearate (and) polyglyceryl-2 isostearate [Apifac], Glyceryl stearate (and) PEG-100 stearate. [Arlacel 165], PEG-5 Glyceryl stearate [Arlatone 983 S], Sorbitan monooleate, such as span 20, span 40, span 60, span 65, span 80, span 85, and Polyglyceryl-3 Ricinoleate.[Arlacel 1689], Sorbitan Stearate and sucrose cocoate [arlatone 2121], Glyceryl stearate and laureth-23 [Cerasynth 945], Cetearyl alcohol and ceteth-20 [Cetomacrogol Wax], Cetearyl alcohol and Polysorbate 60 and PEG-150 and stearate-20[Polawax GP 200, Polawax NF], Cetearyl alcohol and cetearyl polyglucoside [Emulgade PL 1618], Cetearyl alcohol and ceteareth-20 [Emulgade 1000NI, Cosmowax], Cetearyl alcohol and PEG-40 castor oil [Emulgade F Special], Cetearyl Alcohol and PEG-40 Castor Oil and Sodium Cetearyl Sulfate [Emulgade F], Stearyl Alcohol and Steareth-7 and Steareth-10 [Emulgator E 2155], Cetearyl Alcohol and Szeareth-7 and steareth-10 [Emulsifying wax U.S.N.F], Glyceryl stearate and PEG-75 stearate [Gelot 64], Propylene Glycol ceteth-3 Acetate [Hetester PCS], Propylene Glycol isoceth-3 Acetate [Hetester PHA], Cetearyl alcohol and Ceteth-12 and oleth-12 [Lanbritol Wax N 21], PEG-6 Stearate and PEG-32 Stearate [Tefose 1500], PEG-6 Stearate and ceteth-20 and steareth-20 [Tefose 2000], PEG-6 Stearate and ceteth-20 and Glyceryl Stearate and steareth-20 [Tefose 2561], Glyceryl Stearate and ceteareth-20 [Teginacid H, C, X].

Anionic alkaline bases such as PEG-2 Stearate SE, Glyceryl stearate SE [Monelgine, Cutina KD], Propylene glycol stearate [Tegin P].

Anionic acid bases such as Cetearyl Alcohol and Sodium cetearyl sulfate [Lanette N, Cutina LE, Crodacol GP], Cetearyl Alcohol and sodium Lauryl Sulfate [Lanette W], Trilaneth-4 Phosphate and glycol stearate and PEG-2 Stearate [Sedefos 75], Glyceryl stearate and sodium lauryl Sulfate [Teginacid Special].

Cationic acid bases such as cetearyl Alcohol and cetrimonium bromide.

The emulsifiers may be used in an amount of, for example, from 0.1 wt-% to 10 wt-%, especially from 0.1 wt-% to 8 wt-% and preferably from 0.1 wt-% to 5 wt-%, based on the total weight of the emulsion.
The ratio of the water phase to the oil phase in the reaction solution can go from 5: 95 to 60:40, preferably from 50:50 to 20:80.

The reaction is carried out by
(i) preparing the water in oil emulsion comprising at least one biopolymer, water and starch comprising particles and
(ii) starting the coating-, embedding- or encapsulating process by adding Ca²⁺ ions.

The compounds are isolated and if necessary washed and/or purified.

In addition to (or as a replacement of) Ca²⁺ other alkaline-earth metals can be used as well, especially Mg²⁺. But because the compounds according to the present invention are used in food products, the concentration of other ions than Ca²⁺ is usually low.

Therefore the present invention relates a process of production of compounds, which are starch containing particles coated, embedded or encapsulated by at least one biopolymer,
wherein

| | |
|---|---|
| 0.4 - 20 wt-% | based on the total weight of water phase of the reaction solution, of at least one biopolymer, and |
| 60 - 99.5 wt-% | based on the total weight of the water phase of the reaction solution, of water, and |
| 0.1 - 20 wt-% | based on the total weight of the water phase of the reaction solution, of at least one starch, are used |

characterized in that the process is carried out in an emulsion.

As already stated the starch can be added in pure form or in the form of a mixture with other ingredients.

Therefore the present invention relates a process of production of compounds, which are starch containing particles coated, embedded or encapsulated by at least one biopolymer,
wherein

| | |
|---|---|
| 0.25 - 20 wt-% | based on the total weight of the water phase of the reaction solution, of at least one biopolymer, and |
| 50 - 99.5 wt-% | based on the total weight of the water phase of the reaction solution, of water, and |
| 0.05 - 20 wt-% | based on the total weight of the water phase of the reaction solution, of at least one starch, |
| 0.1 - 10 wt-% | based on the total weight of the water phase of the reaction solution, of Ca²⁺ ions, are used |

characterized in that the process is carried out in an emulsion, whereby the ratio of water phase to oil phase goes from 5: 95 to 60:40, preferably from 50:50 to 20:80.

But in some cases (depending on the surfactant) the ratio can be shifted in one or the other direction.

Usually the process is done by mixing the biopolymer, the emulsion and the starch. Afterwards the Ca²⁺ ions is added. The reaction is usually done as a one pot reaction.

The concentration of the Ca²⁺ ions can be from 0.1 to 10 wt-% in the reaction solution. Preferably, the concentration of the Ca²⁺ ions is 0.1 to 9 wt-%, more preferably 0.1 - 8 wt-%, especially preferably 2.5 to 10 wt-% very especially preferred from 3.5 to 10 wt-% based on the total weight of the reaction solution.

The Ca²⁺ can be added in form of any soluble salt. The counterion of the Ca²⁺ salt does not affect the reaction, therefore the choice of a Ca²⁺ salt is not dependent on the counterion. Suitable Ca²⁺ salts are for example CaCl₂, CaSO₄. It is also possible to use salt which are usually hardly soluble or even insoluble in water, but when using a low pH they become soluble. An example for such a salt is CaCO₃.

The compounds are isolated and if necessary washed and/or purified.

The reaction can also comprise a posthardening step. Such a posthardening step is carried out in a Ca²⁺ solution after the coating, embedding or encapsulating process. Such a process can be carried within minutes or it can be carried out during several hours. In some cases the posthardening process can be continued when the end product is stored (or sold) in a Ca²⁺ solution. The posthardening reaction solution can also contain in addition to (or as a replacement of) Ca²⁺ other alkaline-earth metals.

The compounds according to the present invention are incorporated into food products. Food products for animals as well as humans can be provided. Preferably food products for humans are provided.
The compounds obtained by the inventive process are very stable so they can be used in any food product which needs to have starch in it. The term food products covers any kind of drinks or other liquid food product, snacks, candies and confections, dessert mixes, granola bars, energy bars, various beverages, shelf stable powders, ready to eat foods such as puddings, frozen yogurts, ice creams, frozen novelties; cereals, snacks, meal replacements, baked goods, pasta products, confections, military rations, specially formulated foods for children, and specialized gastric enteral feeding formulations.

The food product can be treated with any usually used food technology process like cooking, baking, freezing, pasterizing, etc. without destroying the compounds obtained by the inventive process.

Because the active component is encapsulated by the method of the subject invention, the resulting coated compounds are relatively inert and bland in both aroma and taste. This allows the compounds of the subject invention to be incorporated in the disclosed foods without affecting the characteristic properties and flavours of the food.

In WO 2005/020717 (examples 1, 2 and 3), WO 2005/020718 (examples 1 and 2) and WO 2005/020719 (examples 1, 2 and 3) suitable food forms can be found, wherein the particles obtained by the process according to the present invention can be put in.

### Description of the figures:

- **Figure 1:**: Confocal scanning light microscopy images of Ca-alginate gel beads containing entrapped rice starch granules (staining with acridine orange for 3 days); initial water phase contained 2% alginate and 2.5% starch.
- **Figure 2:**: Starch hydrolysis kinetic curves for rice starch granules entrapped in Ca-alginate beads (average size of 480 micron) versus non encapsulated rice starch *(in-vitro* test data); initial water phase in the emulsion method contained 2% alginate and 5% starch; pretreatment in temperature before hydrolysis assay: 15 min at 75°C.
- **Figure 3:**: Starch hydrolysis kinetic curves for rice starch granules entrapped in Ca-alginate beads (average size of 480 micron) versus non encapsulated rice starch *(in-vitro* test data); initial water phase in the emulsion method contained 2% alginate and 5% starch; pretreatment in temperature before hydrolysis assay: 15 min at 75°C.
- **Figure 4.:**: Glucose release for alginate microbeads with encapsulated (circles) and unencapsulated (squares) starch. Error bars represent standard deviation from the mean of triplicate samples.

The following examples serve to illustrate the invention without limiting the invention to them.

If not otherwise stated the percentages are weight percentages and the temperatures are given in Celsius.

### Example 1

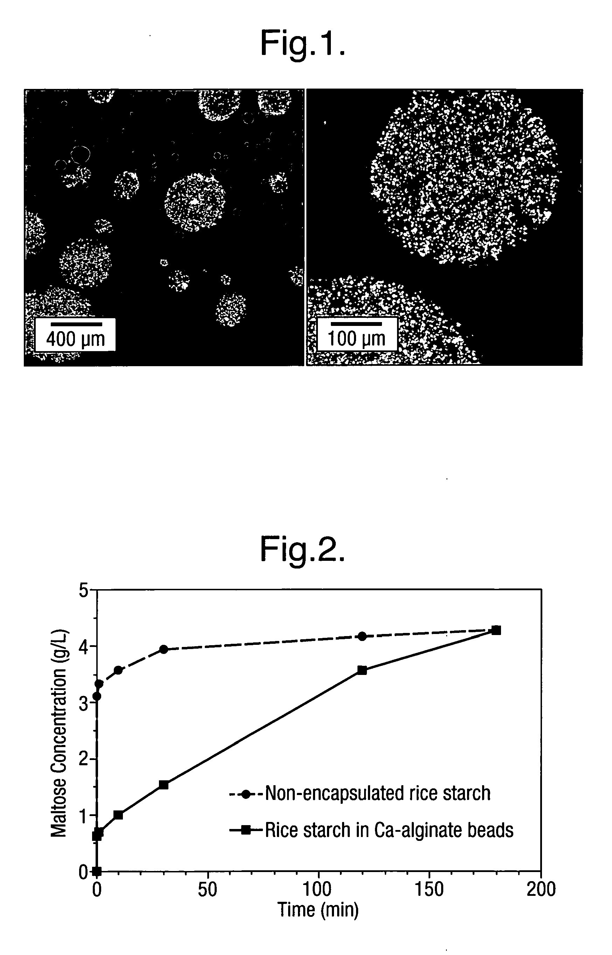

A 1-2% alginate solution (Sigma-Aldrich no. A-7128: alginic acid sodium salt, high mannuronic acid content) containing 1 to 10% rice starch granules (Remy DR, ex. Remy, Orafti Group, Belgium) and 0.2% Tween 20 (Polysorbate 20, no. 233360010, ex. Acros Organics) was first emulsified at ambient temperature in sun flower oil. The water phase volume fraction was 30% and the oil phase contained monoglycerides, Hymono 8903 (ex. Quest International, The Netherlands), predispersed at 60°C at a concentration of 0.2 weight % with respect to the water phase. The water phase emulsification in oil was performed during 25 min with a rotating palette in combination with four wall baffles at a constant speed of rotation between 300 and 1000 rpm. A 1 M solution of calcium chloride was then added quickly along the side of the beaker to reach a final calcium ions concentration of 0.1M in the aqueous phase. The break-up of the water-in-oil emulsion was obtained as the alginate fine droplets start to gel. After full phase separation the oil was removed by repetitive washing of the gel beads on a filter with a 0.1 M CaCl₂ solution or pure water. The microbeads were finally stored overnight in a 0.1 M CaCl₂ solution at refrigerated temperature before use. Fig. 1 shows the spherical shape of the alginate beads as well as the homogeneous distribution of the starch granules (green-yellow spots) inside the beads.

The hydrolysis rate of encapsulated starch was evaluated by means of an in-vitro test using alpha-amylase enzyme. First a suspension of gel beads containing 1% starch (or a 1% starch granules suspension as a control) was prepared in Pipes buffer (piperazine-1,4-bis(2-ethanesulfonic acid), ex. Acros Organics) at pH 6.9. The starch-containing samples were then preheated at 75°C or 95°C during 15 min before cooling down to 37°C. 5 ml of the starch sample was added to 5 ml of a freshly made alpha-amylase solution prepared by adding 0.1026 g of porcine pancrease alpha-amylase (Sigma-Aldrich no. A-6255; 700-1400 units/mg protein) to 40 ml of a 0.9% NaCl solution. The starch/amylase mixture was then incubated straightaway at 37°C under gentle stirring. 500 µL samples were collected at different times in order to follow the kinetic of hydrolysis and build full hydrolysis profiles. 500 µL of DNSA solution (Aldrich no. 128848: 3,5-dinitrosalicylic acid) was added to each 500µL collected sample and the resulting mixture was heated up to 99°C during 10 min so that the DNSA reagent could react with the reducing end groups. After a ten or twenty-fold dilution step, the absorbance at 540 nm of the reacted samples was measured and compared to calibration curve of maltose conversion.

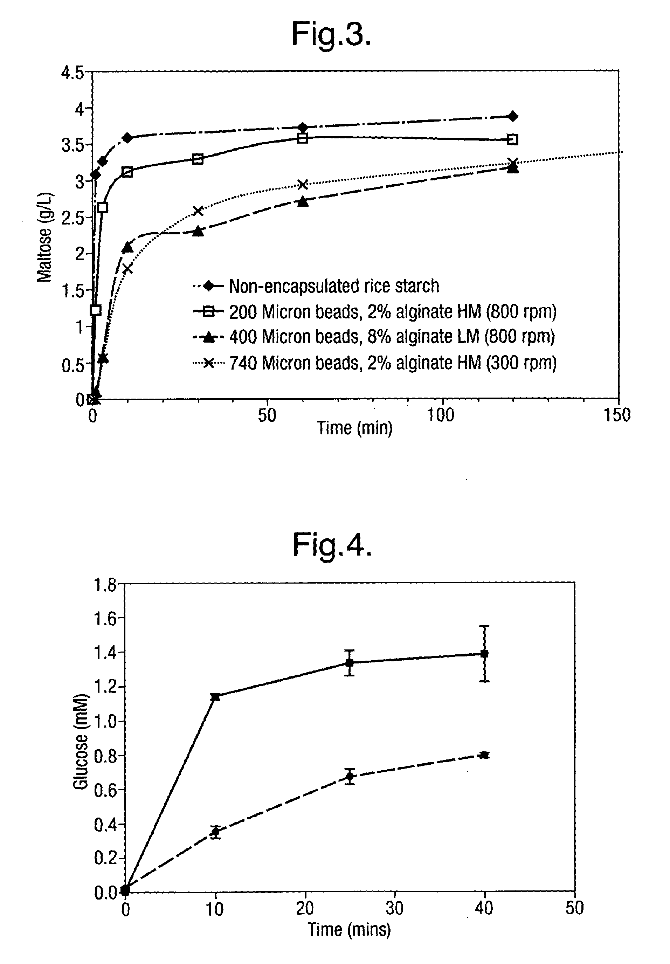

The starch hydrolysis data of the Figure 2 show that encapsulating starch in calcium-alginate beads allow to control the digestion rate of starch by amylase in-vitro. They also show that the alginate gel encapsulates can sustain a heating / cooking step and still lead to a retarded hydrolysis with fully gelatinised starch.

### Example 2:

Emulsion made alginate beads containing rice starch granules were produced via the same method described in example 1 except that there was no overnight hardening step in 0.1M CaCl₂ and except that the emulsifier dispersed in the oil phase; Hymono 8903 was replaced by Span 80 (Sorbitan monooleate, no. 85548, ex. Fluka Chemica) at the same concentration of 0.2 weight % with respect to the water phase. Two different high M alginate products varying in molecular weight were utilised: a high Mw, alginate HM (Sigma-Aldrich no. A-7128: alginic acid sodium salt, with a viscosity of 1400 cP at 2% in water) and a low Mw, alginate LM (Sigma-Aldrich no. A-5158: alginic acid sodium salt, with a viscosity of 25 cP at 2% in water). The initial concentration of alginate HM in the water phase of the emulsion was 2 % by weight and for alginate LM it was increased to 8% by weight (so that the rheological properties of alginate LM solution such as viscosity and elastic modulus were as close as possible to that of alginate HM solution). The microbeads HM (made with alginate HM) and the microbeads LM (with alginate LM) were produced with the same applied palette rotational speed of 800 rpm. The average particle size of the gel beads were measured by small angle light scattering of suspended encapsulates in water: mean diameter of ca. 220 micron for beads HM and ca. 400 micron for beads LM.

The effect of alginate concentration in the gel beads (network density) on starch hydrolysis rate was assessed in-vitro by applying the same procedure described in example 1. Figure 3 displays the hydrolysis profiles of heat-treated microbeads HM and LM produced at 800 rpm, having an average size of 200 micron and 400 micron respectively. In addition it also shows the data obtained for alginate HM beads made at 300 rpm, leading to an average diameter of 740 micron. The hydrolysis of starch entrapped in microbeads LM appeared much more delayed compared to microbeads HM prepared at the same rotational speed. However the mean bead diameter was also 2 times higher for the LM system compared to HM. Therefore the contribution of the gel network density and the contribution of the bead size to the retarded hydrolysis could not be separated. The third microbeads sample produced, with alginate HM, at a lower stirring speed, had a bigger mean diameter of 740 micron and led to a close hydrolysis profile compared to that of the LM system. The only way to explain this result was seen as being due to the higher density of the gel network in the LM system (or lower porosity), hence a retarded diffusion of amylase through the gel network. If this would not be the case, the 400 micron beads would not lead to the same delayed starch hydrolysis than for the 740 micron beads. This example also shows the effect of the average bead size on the starch digestion rate.

### Example 3:

Alginate microbeads containing starch were prepared using an emulsion route. Table 1 gives the ingredients used.

| **Ingredient** | **Quantity (g)** |
|---|---|
| Rice starch | 2.0 |
| Sunflower oil | 396.0 |
| Admul WOL emulsifier | 4.0 |
| Water | 196.0 |
| Sodium alginate (Manugel DMB) | 4.0 |
| Calcium chloride dihydrate | 20.0 |

Sunflower oil and surfactant, Admul Wol, were mixed well at 500rpm using an overhead stirrer with a propeller blade. An alginate/starch slurry was prepared by mixing 1% rice starch (ex. Remy Industries, Belgium) into a 2% alginate (Manugel DMB, ex. ISP Alginates) solution. This slurry was then poured into the sunflower oil phase with continual mixing at 500rpm using the overhead stirrer. This formed a water in oil (W/O) emulsion. A 2.7M calcium chloride solution was added to the emulsion whilst stirring (concentration based on dilution to 0.68M with the dispersed aqueous alginate/starch phase). The mixture was then stirred for 2 hours at 500rpm to allow the dispersed aqueous phase to gel. The microbeads were separated from the emulsion by centrifugation for 30 minutes at 3000 rpm. The microbeads were washed to remove any remaining oil with a 1% Tween 60 solution containing 0.68M CaCl₂. The mixture was centrifuged to separate the microbeads. This washing step was repeated and then the microbeads were further washed with 0.68M CaCl₂ solution. The beads were stored in 0.68M CaCl₂ solution at 5°C overnight before use. Alginate microbeads without starch were prepared in the same way by adding alginate to the oil phase (without starch).

3.5g of alginate/1 % rice starch microbeads were placed in a container with 23ml deionised water and stirred gently at 37°C. Glucose concentration at time zero was determined using the glucose sensor. 10µl α-amylase (Sigma-Aldrich A6255; 1370U/mg protein; 32mg protein/ml) was diluted in 10ml deionised water and 3ml starch assay maltase (Sigma-Aldrich A9144-1VL Starch assay reagent 1; Reconstituted with 20ml de-ionised water) was added. 1ml of this enzyme solution was added to the container with the microparticles. The amylase was diluted such that the concentration was at a physiologically relevant concentration (5-15nM) (Ferraris *et al*, 1990). Stirring was continued and glucose was determined over 40 minutes.

The size range of the obtained particles was 50 - 800 microns with the majority of particles around 100 microns. The particles size distribution was determined using a Malvern laser light scattering device (Malvern Instruments, UK) with a 1000µm lens.

The effect of encapsulation was determined by comparing alginate-starch microparticles and alginate microparticles with unencapsulated starch present. Figure 4 shows the glucose release over time.

## Claims

1. A process for production of compounds, which are starch containing particles coated, embedded or encapsulated by at least one biopolymer, **characterized in that** the process is carried out in an emulsion.

2. A process according to claim 1, wherein the compounds can have any shape.

3. A process according to any of the preceeding claims, wherein the starch can be chosen from the group consisting of raw starches, modified starches, and pregelatinized starches.

4. A process according to any of the preceeding claims, wherein the biopolymer is present in the form of a gel.

5. A process according to claim 4, wherein the gel comprises
0.5 - 20 wt-%, based on the total weight of the biopolymer gel of at least one biopolymer and
80 - 99.5 wt-%, based on the total weight of the biopolymer gel, of water.

6. A process according to any of the preceeding claims, wherein the content of starch is 0.1 - 20 wt-%, based on the total weight of the compounds.

7. A process according to any of the preceeding claims, wherein the size of the compounds is less than 1000 microns.

8. A process according to any of the preceeding claims, wherein the biopolymers are physically and/or covalently crosslinkable polysaccharides.

9. A process according to any of the preceeding claims, wherein the emulsion is a water-in-oil emulsion.

10. A process according to any of the preceeding claims, wherein the oil of the emulsion can be a vegetable oil or an animal oil as well as mixture of both types.

11. A process according to any of the preceeding claims, wherein the emulsion comprises at least one oil from the group consisting of Coconut oil, Corn oil, Cottonseed oil, Canola oil, Olive oil, Palm oil, Peanut oil (Ground nut oil), Safflower oil, Sesame oil, Soybean oil, Sunflower oil, Almond oil, Cashew oil, Hazelnut oil, Macadamia oil, Pecan oil, Pistachio oil, Walnut oil, Acai oil, Blackcurrant seed oil, Borage seed oil, Evening primrose oil, Carob seed pods, Amaranth oil, Apricot oil, Argan oil, Avocado oil, Babassu oil, Ben oil, Carob pod oil (Algaroba oil), Coriander seed oil, False flax oil (made of the seeds of Camelina sativa), Hemp oil, Kapok seed oil, Meadowfoam seed oil, Mustard oil (pressed), Okra seed oil (Hibiscus seed oil), Perilla seed oil, Pine seed oil, Poppyseed oil, Prune kernel oil, Pumpkin seed oil, Quinoa oil, Ramtil oil, Rice bran oil, Tea oil (Camellia oil), Thistle oil, Wheat germ oil, Castor oil, radish oil, Ramtil oil and Tung oil, tallow oil and fish oil.

12. A process according to any of the preceeding claims, where in the emulsion the ratio of the water phase to the oil phase can go from 5: 95 to 60:40, preferably from 50:50 to 20:80.

13. A process according to any of the preceeding claims, wherein the reaction is carried out by
(i) preparing the water in oil emulsion comprising at least one biopolymer, water and at least one starch comprising particle and
(ii) starting the coating-, embedding- or encapsulating process by adding Ca²⁺ ions.

14. A process according to any of the preceeding claims, wherein
0.4 - 20 wt-% based on the total weight of water phase of the reaction solution, of at least one biopolymer, and
60 - 99.5 wt-% based on the total weight of the water phase of the reaction solution, of water, and
0.1 - 20 wt-% based on the total weight of the water phase of the reaction solution, of at least one starch,
are used.

15. Food products comprising particles obtained by the compounds according to any of claims 1-14.

16. Food products according to claim 15, which are chosen from the group consisting of any kind of drinks or other liquid food product, snacks, candies and confections, dessert mixes, granola bars, energy bars, various beverages, shelf stable powders, ready to eat foods such as puddings, frozen yogurts, ice creams, frozen novelties; cereals, snacks, meal replacements, baked goods, pasta products, confections, military rations, specially formulated foods for children, and specialized gastric enteral feeding formulations.
